Europäisches Patentamt

European Patent Office

Office européen des brevets

(19)

(11) Publication number: **0 071 579**

**B1**

(12) **EUROPEAN PATENT SPECIFICATION**

(45) Date of publication of patent specification: **14.08.85**

(51) Int. Cl.⁴: **A 01 F 12/28**

(21) Application number: **82830180.4**

(22) Date of filing: **16.06.82**

(54) **Device for adjusting the position of the thresher concave of a combine harvester.**

(30) Priority: **23.07.81 IT 6802581**

(43) Date of publication of application:
**09.02.83 Bulletin 83/06**

(45) Publication of the grant of the patent:
**14.08.85 Bulletin 85/33**

(84) Designated Contracting States:
**BE DE FR GB**

(56) References cited:
**FR-A- 844 484**
**FR-A- 920 307**
**US-A-2 616 433**
**US-A-2 931 363**

(73) Proprietor: **PIETRO LAVERDA S.p.A.**
**I-36042 Breganze (Vicenza) (IT)**

(72) Inventor: **Raineri, Giuseppe**
**Via Bellini 20/22**
**I-36061 Bassano del Grappa (Vicenza) (IT)**

(74) Representative: **Notaro, Giancarlo et al**
**c/o Jacobacci-Casetta & Perani S.p.A. Via Alfieri,
17**
**I-10121 Torino (IT)**

Courier Press, Leamington Spa, England.

## Description

The present invention relates to combine harvesters. In particular, the invention is concerned with combine harvesters of the type including:
— a fixed structure, and
— a threshing unit including a thresher cylinder mounted transversely and rotatably on the fixed structure, and a thresher concave in the form of a concave grille suspended adjustably from the fixed structure adjacent a lower part of the thresher cylinder, in which the thresher concave has a front edge and a rear edge lying along a direction substantially perpendicular to the longitudinal plane of symmetry of the harvester,

wherein the thresher concave includes at least one elongate appendage which projects substantially as an extension of the thresher concave beyond its rear edge and is articulated to the fixed structure of the harvester about a transverse axis and wherein the front edge of the thresher concave is connected to the fixed structure of the harvester through adjusting means which allow the angular position of the thresher concave to be adjusted about the said tranverse axis, said adjusting means including:
— a shaft rotatably supported about a transverse axis from the fixed structure;
— a pair of levers fixed to the ends of the shaft and each having its free end pivotally connected to the thresher concave close to the front edge thereof;
— an auxiliary lever fixed for rotation with the shaft, and drive means to cause the rotation of the auxiliary lever and a consequent displacement of the thresher concave relative to the thresher cylinder.

A combine harvester of this type is known from FR—A—844 484. In this known device however, the said elongate appendage is formed by a rod pivoted to the thresher concave, which does not allow an efficient adjusting action. Moreover the structure and arrangement of the adjusting means is relatively bulky.

In harvesters of conventional type, the thresher concave is usually suspended from the fixed structure of the harvester at its front edge and its rear edge by means of separate adjustable ties. The distance of the thresher concave from the thresher is variable by means of these ties, so us to adapt it to the type and conditions of the harvest.

This known conventional solution has the disadvantage of being rather complicated and expensive, and of requiring relatively laborious adjusting operations, particularly when it is necessary to operate the respective adjusting ties for varying the positions of the front edge and the rear edge separately.

The object of the present invention is to provide a device for adjusting the position of the thresher concave of a combine harvester, which is simple and economic and allows the adjusting operations to be carried out easily and rapidly.

In order to achieve this object, the present invention has as its subject a combine harvester of the type specified initially, characterised in that the said elongate appendage is rigidly connected to the thresher concave and in that said adjusting means further include:
— two cranked coupling elements, one for each lever and acting as the connection between the free ends of the levers and the thresher concave, an individual elongated aperture in the fixed structure for each of the cranked coupling elements, the cranked coupling elements extending through its associated elongated aperture and serving to allow for the difference in the radial paths of movement of the free ends of the lever and the front edge of the thresher concave, said auxiliary lever having its free end provided with an element having a threaded hole, said element being pivotable relative to the free end about an axis parallel to the shaft, and
— threaded adjusting tie-rod pivotable about a fixed horizontal axis normal to the direction of motion of the machine and having an end screwed into the threaded hole, said tie-rod being driven by said drive means so as to rotate about its longitudinal axis.

By virtue of this characteristic, the device according to the present invention has a structure which is simple and economical to manufacture with a smaller number of parts. Moreover, by means of a single adjustment, it is possible to alter the position of both front and rear edges of the thresher concave simultaneously and in an efficient manner.

Further characteristics and advantages of the present invention will emerge from the following description made with reference to the appended drawings, provided purely by way of non-limiting example, in which:

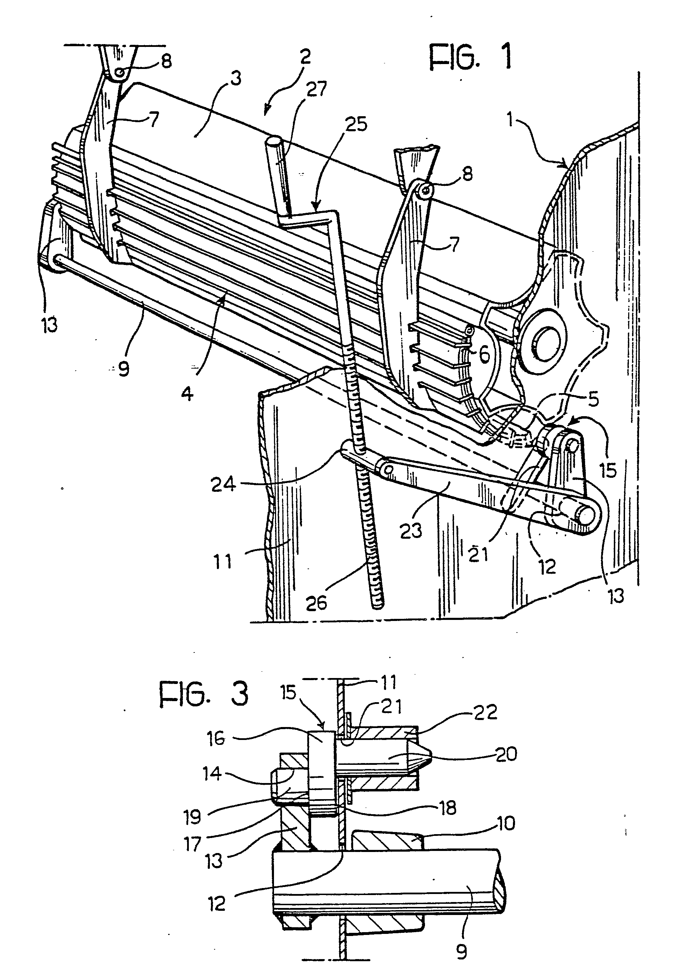

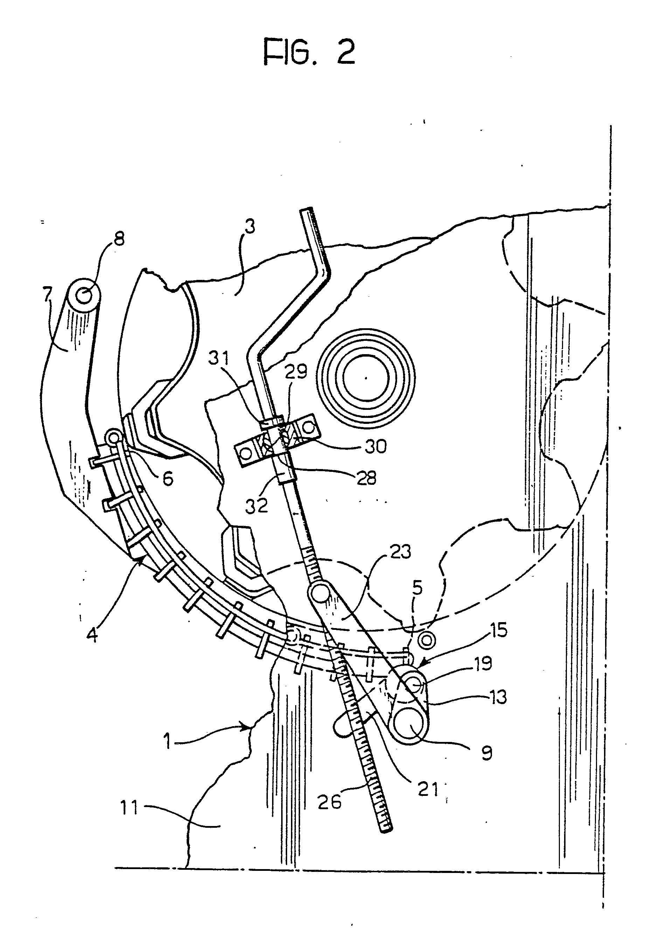

Figure 1 is a perspective view of the adjusting device according to the present invention,

Figure 2 is a side view of the adjusting device according to the present invention, and

Figure 3 is a sectional view on an enlarged scale of a detail of Figure 2.

In the present description and in the claim which follows, the terms "longitudinal" and "longitudinally" refer to a direction substantially coincident with the direction of advance of the harvester during operation, and the terms "transverse" and "transversely" refer to the horizontal direction perpendicular to the longitudinal direction.

In the drawings, the fixed structure 1 of the combine harvester comprises a threshing unit 2 including a thresher cylinder 3 and a thresher concave 4. The thresher cylinder 3 is mounted transversely and rotatably on the fixed structure, while the thresher concave 4, which is in the form of a concave grille with a front edge 5 and a rear edge 6, is located adjacent the lower part of the thresher cylinder 3. The thresher concave 4 is provided with two elongate appendages 7 which project substantially as extensions of the thresher concave beyond its rear edge. The free end of the appendages 7 are articulated to the fixed structure 1 of the harvester about a transverse axis by means of pins 8.

A shaft 9 is supported rotatably by the fixed structure about a transverse axis by means of two supports 10. The two ends of the shaft project from the sides 11 of the fixed structure 1 through holes 12 and are each fixed to a lever 13. The free end of each lever 13 has a hole 14.

Two cranked coupling members 15 are connected to respective levers 13, and each is constituted by a central cylindrical body 16 having two opposite surfaces 17, 18 and two pins 19, 20 which extend in opposite directions from the surfaces 17, 18 and have non-coincident axes. The pins 19 are inserted in the holes 14 of the levers 13.

Each of the pins 20 engages an elongated aperture 21 in the respective side 11 of the structure 1, and is rotatably mounted within a bush 22 fixed to the thresher concave close to the front edge thereof.

The shaft 9 is provided at one end with an auxiliary lever 23 the free end of which supports, for pivoting about transverse axis, an element 24 having a threaded hole in which is screwed a threaded end 26 of a tie rod 25. The opposite end 27 of the tie rod 25 is shaped in the form of a handle. The tie rod is further rotatably inserted in a hole 28 of a ball nut 29 pivotally mounted about a transverse axis on the fixed structure 1 by means of a support bush 30.

Two sleeves 31, 32 fitted onto the tie rod 25 at the sides of the ball 29 prevent axial sliding of the tie rod relative to the nut 29 and, hence, relative to the fixed structure.

The position of the thresher concave of the combine harvester is adjusted by rotation of the tie rod 25, for example, by manual operation of its end 27. This rotation results, through the element 24, in the angular displacement of the auxiliary lever 23 and, hence, of the shaft 9 about its axis of rotation; this rotation, through the drive link constituted by the levers 13 and the element 15, causes a movement of the front edge 5 and, consequently, of the rear edge 6 of the thresher concave 4 about the transverse axis of the pins 8.

## Claim

Combine harvester, including:
— a fixed structure (1), and
— a threshing unit (2) including a thresher cylinder (3) mounted transversely and rotatably on the fixed structure (1), and a thresher concave (4) in the form of a concave grille suspended adjustably from the fixed structure (1) adjacent a lower part of the thresher cylinder (3), in which the thresher concave (4) has a front edge (5) and a rear edge (6) lying along a direction substantially perpendicular to the longitudinal plane of symmetry of the harvester, wherein the thresher concave (4) includes at least one elongate appendage (7) which projects substantially as an extension of the thresher concave (4) beyond its rear edge (6) and is articulated to the fixed structure (1) of the harvester about a transverse axis (8) and wherein the front edge (5) of the thresher concave (4) is connected to the fixed structure (1) of the harvester through adjusting means which allow the angular position of the thresher concave (4) to be adjusted about the said transverse axis (8), said adjusting means including:
— a shaft (9) rotatably supported about a transverse axis from the fixed structure (1);
— a pair of levers (13) fixed to the ends of the shaft and each having its free end pivotally connected to the thresher concave (4) close to the front edge (5) thereof;
— an auxiliary lever (23) fixed for rotation with the shaft (9), and
— drive means (27) to cause the rotation of the auxiliary lever (23) and a consequent displacement of the thresher concave (4) relative to the thresher cylinder (3) characterised in that the said elongate appendage (7) is rigidly connected to the thresher concave (4) and in that said adjusting means further include
— two cranked coupling elements (15) one for each lever (13) and acting as the connection between the free ends of the levers (13) and the thresher concave (4), an individual elongate aperture (21) in the fixed structure (1) for each of the cranked coupling elements (15), the cranked coupling elements (15) extending through its associated elongated aperture (21) and serving to allow for the difference in the radial paths of movement of the free ends of the levers (13) and the front edge of the thresher concave (4), said auxiliary lever (23) having its free end provided with an element (24) having a threaded hole, the said element (24) being pivotable relative to the free end about an axis parallel to the shaft (9), and
— a threaded adjusting tie-rod (25) pivotable about a fixed horizontal axis normal to the direction of motion of the machine and having an end (26) screwed into the threaded hole, said tie-rod being driven by said drive means (27) so as to rotate about its longitudinal axis.

## Revendication

Moissonneuse-batteuse, comportant:
— une structure fixe (1), et
— un dispositif de battage (2) comprenant un cylindre batteur (3) monté transversalement et rotativement sur la structure fixe (1), et un contre-batteur (4) ayant la forme d'une grille concave suspendue de manière réglable à la structure fixe (1) au voisinage d'une partie inférieure du cylindre batteur (3), dans lequel le contre-batteur (4) a un bord avant (5) et un bord arrière (6) s'étendant suivant une direction sensiblement perpendiculaire au plan de symétrie longitudinale de la moissonneuse, dans laquelle le contre-batteur (4) comprend au moins un empennage allongé (7) qui fait saillie sensiblement comme un prolongement du contre-batteur (4) au-delà de son bord arrière (6), et est articulé à la structure fixe (1) de la moissonneuse autour d'un axe transversal (8) et dans laquelle le bord avant (5) du contre-batteur (4) est relié à la structure fixe (1) de la moissonneuse par l'intermédiaire de moyens de réglage qui permettent d'ajuster la position angulaire du contre-batteur (4) autour dudit axe transversal (8), les moyens de réglage comportant:

— un arbre (9) supporté de manière rotative autour d'un axe transversal depuis la structure fixe (1);

— une paire de leviers (13) fixés aux extrémités de l'arbre, et ayant chacun son extrémité libre reliée de manière pivotante au contre-batteur (4) près du bord avant (5) de celui-ci;

— un levier auxiliaire (23) fixé pour tourner avec l'arbre (9), et

— des moyens d'entraînement (27) pour provoquer la rotation du levier auxiliaire (23) et un déplacement conséquent du contre-batteur (4) par rapport au cylindre batteur (3) caractérisée en ce que ledit empennage allongé (7) est relié rigidement au contre-batteur (4) et en ce que lesdits moyens de réglage comprennent en outre

— deux organes de liaison coudés deux fois (15), un pour chaque levier (13), et agissant comme liaison entre les extrémités libres des leviers (13) et le contre-batteur (4), une ouverture allongée individuelle (21), dans la structure fixe (1) pour chacun des organes de liaison coudés (15), chaque organe de liaison coudé (15) traversant son ouverture allongée associée (21) et servant à tenir compte de la différence entre les chemins radiaux de déplacement des extrémités libres des leviers (13) et le bord avant du contre-batteur (4), ledit levier auxiliaire (23) ayant son extrémité libre munie d'un élément (24) percé d'un trou fileté, cet élément (24) étant pivotant par rapport à l'extrémité libre autour d'un axe parallèle à l'arbre, et

— une tige de réglage filetée (25) pivotant autour d'un axe fixe horizontal, perpendiculaire à la direction de déplacement de la machine et ayant une extrémité (26) vissée dans le trou fileté, cette tige étant entraînée par les moyens d'entraînement (27) de manière à tourner autour de son axe longitudinal.

**Patentanspruch**

Mähdrescher
— mit einer festen Tragkonstruktion (1),
— sowie mit einer Drescheinheit (2), die eine in Querrichtung an der festen Tragkonstruktion (1) drehbar montierte Dreschtrommel (3) sowie einen Dreschkorb (4) in Form eines konkaven Gitters umfaßt, der an der festen Tragkonstruktion (1) in der Nähe des unteren Teils der Dreschtrommel (3) verstellbar aufgehängt ist und eine vordere Kante (5) sowie eine hintere Kante (6) besitzt, die in einer im wesentlichen senkrecht zur longitudinalen Symmetrieebene des Mähdreschers orientierten Richtung verlaufen,
wobei der Dreschkorb (4) wenigstens ein langgestrecktes Auslegerteil umfaßt, das als Ansatz des Dreschkorbs (4) über seine hintere Kante hinausragt und mit der festen Tragkonstruktion (1) des Mähdreschers gelenkig um eine transversale Achse (8) schwenkbar verbunden ist,
und wobei die vordere Kante (5) des Dreschkorbs (4) mit der festen Tragkonstruktion (1) des Mähdreschers über Verstellmittel verbunden ist, die eine Verstellung der Winkelposition des Dreschkorbs (4) um die genannte transversale Achse (8) ermöglichen und die folgende Teile umfassen:

— eine Welle (9), die an der festen Tragkonstruktion (1) um eine transversale Achse drehbar gelagert ist,
— zwei Hebel (13), die an den Enden der Welle (9) befestigt sind und deren freie Enden mit dem Dreschkorb (4) in der Nähe von dessen vorderer Kante (5) schwenkbar verbunden sind,
— einen drehfest mit der Welle (9) verbundenen Hilfshebel (23)
— sowie Antriebsmittel (27), durch welche der Hilfshebel (23) gedreht und damit der Dreschkorb (4) relativ zu der Dreschtrommel (3) bewegt werden kann, dadurch gekennzeichnet, daß das langgestreckte Auslegerteil (7) mit dem Dreschkorb (4) starr verbunden ist und daß die Verstellmittel folgende weitere Teile umfassen:

— zwei kurbelartig gekröpfte Kupplungselemente (15), deren jedes einem der Hebel (13) zugeordnet ist und die als Verbindungsteile zwischen den freien Enden der Hebel (13) und dem Dreschkorb (4) wirken, wobei in der festen Tragkonstruktion (1) jeweils ein Langloch (21) für jedes der gekröpften Kupplungselement (15) ausgebildet ist, durch welches das zugehörige gekröpfte Kupplungselement (15) hindurchragt und das (21) der Differenz in den radialen Bewegungsbahnen der freien Enden der Hebel (13) und der vorderen Kante des Dreschkorbs (4) Rechnung trägt,
wobei an dem freien Ende des Hilfshebels (23) ein Element (24) angeordnet ist, das eine mit einem Gewinde versehene Bohrung besitzt und das relativ zu dem freien Ende des Hilfshebels (23) um eine parallel zu der Welle (9) verlaufende Achse schwenkbar ist,
— sowie eine mit einem Gewinde versehene Einstellstange (25),
die um eine feste, senkrecht zur Bewegungsrichtung der Maschine verlaufende horizontale Achse schwenkbar ist,
die ferner mit einem Ende (26) in die genannte mit einem Gewinde versehene Bohrung geschraubt ist
und die durch die genannten Abtriebsmittel (27) mit einer Drehbewegung um ihre Längsachse beaufschlagbar ist.

0 071 579

FIG. 1

FIG. 3

1

# FIG. 2